# EUROPEAN PATENT SPECIFICATION

(11) **EP 2 079 888 B1**
(45) Date of publication and mention of the grant of the patent: **13.12.2017**
(21) Application number: 07835155.8
(22) Date of filing: 30.10.2007
(51) Int. Cl.: E04D 13/08, F16L 3/127, F16L 3/137, F16L 3/12

(54) **DOWNPIPE HOLDER AND METHOD OF MOUNTING SUCH**
FALLROHRHALTER UND BEFESTIGUNGSVERFAHREN DAFÜR
SUPPORT DE TUYAU DE DESCENTE ET SON PROCÉDÉ DE MONTAGE

(30) Priority: 03.11.2006 SE 0602324
(43) Date of publication of application: 22.07.2009
(73) Proprietor: PLANNJA AB, 971 88 Lulea (SE)
(72) Inventor: AXELSSON, Claes, 57432 Vetlanda (SE); HENRYSSON, Torbjörn, S-570 15 Holsbybrunn (SE); LARSSON, Lars, Gunnar, S-570 81 (SE); RUNSTEN, Gustav, S-570 81 Järnforsen (SE); STÅHLGREN, Björn, S-570 81 Järnforsen (SE)
(74) Representative: Westerholm, Carl Christian
(86) International application number: PCT/SE2007/000955
(87) International publication number: WO 2008/054286

(56) References cited:
- EP-A1- 0 473 213
- WO-A1-98/27294
- WO-A1-98/27294
- DE-U1- 29 720 714
- GB-A- 2 176 824
- SE-C2- 508 849

## Description

### Background of the invention

Downpipe holders is commonly mounted to wooden walls by two flaps on the back of the holder being screwed to the wall. On brick walls, instead a pin in shape of a separate spike with a mounting plate on which the holder can be mounted is commonly used. SE 508849 C2 shows both these means of attachment. On concrete walls, screws and plugs are commonly used instead of spikes. WO 98/27294A1 shows a pipe holder with anchoring means for mounting on a wall.

### Brief description of the present invention

According to the present invention, one means of one of the end portions include an eccentric rotatably mounted at one end and in engagement with said means of the other end portion such that a turning of the eccentric clamps the holder around the downpipe.

### Object of the invention and brief description of the invention

It is one object of the invention to supply a downpipe holder with wall bracket which provides simple and secure mounting and to disclose a method of mounting a downpipe holder.

A downpipe holder with wall bracket is accordingly to the invention characterised in that the back of the holder has a vertical bulge with a horizontal slot in its upper portion and an aperture below the slot, the wall bracket consists of a spike or screw on which a plate is attached close to the rear end of the spike/screw and the upper edge of the plate is curved inwards to form a flap which fits into the horizontal slot of the holder to secure the plate to the holder on the inside of the holder while also the rear end of the spike/screw fits into the aperture of the holder to carry the holder. The method of mounting a downpipe holder to a wall is accordingly to the invention **characterised in** that a spike is first forced into a wall, or a screw is screwed into a wall, said spike/screw close to its end having a plate, whose upper edge is curved inwards to form a flap, and then the holder is secured to the plate by slipping a slot in the back of the holder over the flap and subsequently lower the holder such that the rear end of the spike/screw from outside penetrates an aperture of the holder so as to carry the holder while the flap on the inside of the holder secures the holder.

### Brief description of the drawings

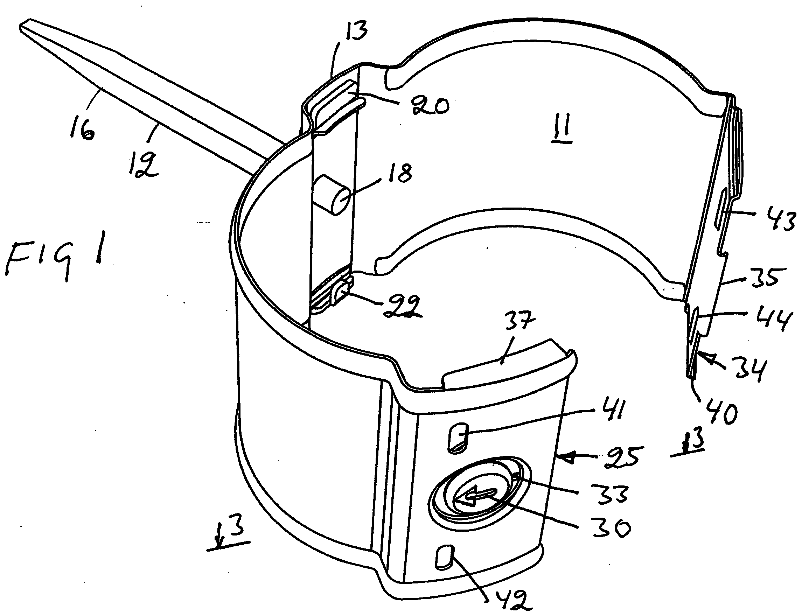

**Figure 1** is a perspective view of an inventive downpipe holder shown as an example of the invention.
**Figure 2** is a perspective view from the back of the downpipe holder and without an in figure 1 shown wall bracket.
**Figure 3** is a section taken along the line 3-3 in figures 1 and 2 with the ends of the holder hooked together.
**Figure 4** corresponds to figure 3 but shows the downpipe holder in the position where it locks a downpipe.
**Figure 5** is a perspective view which shows the wall bracket from figure 1 separately.

### Detailed description of the preferred embodiment

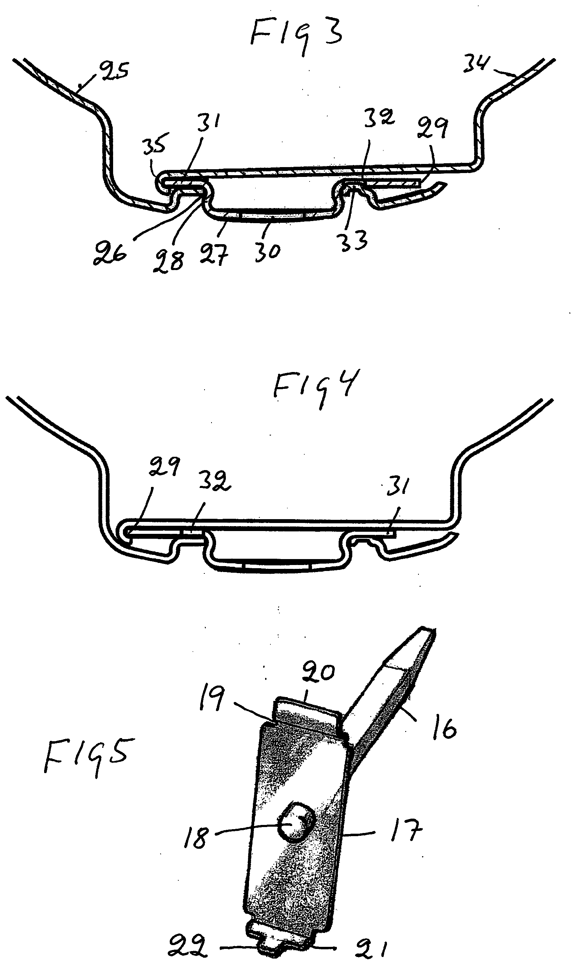

The downpipe holder consists of a bent metal sheet 11 and it has a detachable wall bracket 12. The back of the holder has a vertically oriented raised portion 13 with a slot 15 in the upper part and an aperture 14 below the slot. The aperture 14 is placed in the vertical middle section of the holder. The wall bracket 12 consists of a spike 16 fastened to a plate 17, which is best shown in figure 5. The plate has an aperture and the spike has an end 18 which extends through the aperture. The plate and the spike are welded together. The plate has a step 19 which provides an offset flap 20 at the top, and it has a folded bottom end 21 with a locking flap 22. The spike 16 is used e. g. for brick walls. For concrete walls, a screw which is screwed into a plug in a drilled hole in the concrete is often used instead. For wooden walls, a different type of mean of attachment is commonly used, but a spike could be used.

One end portion 25 of the holder has a circular aperture 26 and a metal sheet 27 has a circular raised portion 28 with an S-shaped side which is snapped into the circular aperture and becomes rotatable in the aperture. The periphery of the metal sheet is eccentric in relation to the aperture 26 and the raised portion 28, and its most eccentric portion 29 is straight. Its least eccentric portion is marked as 31. Thus, the metal sheet 27 forms an eccentric.

The circular raised portion has a slot 30. A chisel or the like can be inserted into the slot to turn the metal sheet 27, that is, the eccentric 27. The eccentric 27 has an aperture 32 and the end portion 25 has a bump 33 which fits in the aperture 32 when the eccentric is in the position shown in figure 3. The holder is delivered with the eccentric in this position and the aperture and bump forms a snap function 32,33 which secures this delivery position.

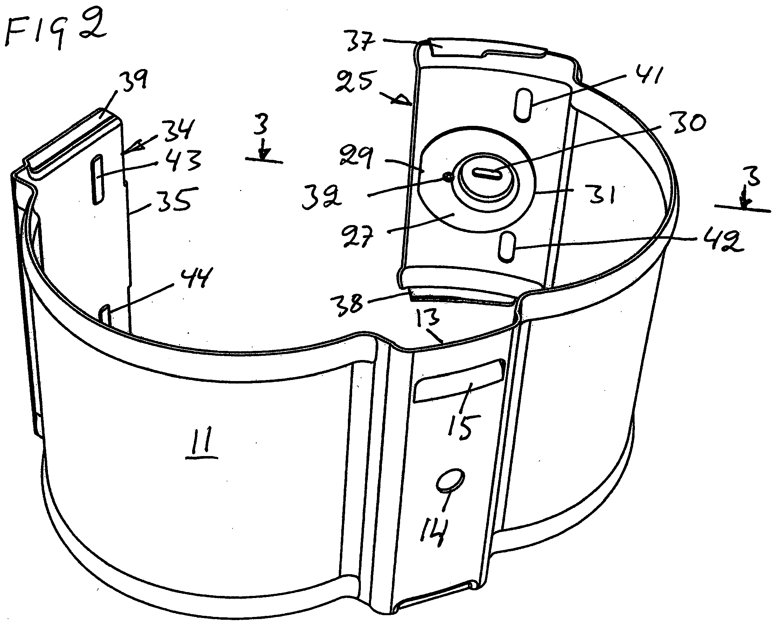

The second end portion 34 of the holder has an outward directed hook 35. As the eccentric 27 is turned to its position shown in figures 2 and 3, the holder can be snapped together by the hook snapping over the least eccentric portion 31 of the eccentric, as shown in figure 3.

The end portion 25 has upper and lower flanges 37,38 which are guided on the outside of flanges 39,40 at the other end portion 34 and thereby secure the end portions in the proper position towards each other.

When a downpipe is assembled, the spike 16 with the plate 17 is first forced into the house wall. The slot 15 of the holder is slipped over the curved inwards flap 20 of the plate so that this is put on the inside of the holder, and the holder is angled down so that the rear end 18 of the spike from outside penetrates the aperture 14 and thereby will carry the holder while the flap 19 on the inside of the holder holds the holder against the plate 17. The locking flap 22 is folded up and locks the lower portion of the holder to the plate. Since the spike 16 is a through pin, it is possible to adjust the position of the spike by forcing it further in, if so required to put all holders in line. The flap 20 and the locking flap 22 is not necessary for the function, but secure the pin 12 and the holder so that they will not be separated in event of external force, e. g. if the downpipe is hit by a car.

When the wall bracket is mounted, the downpipe is inserted into the open holder and the holder is clamped together, as shown in figure 3. The downpipe is not shown in any of the figures. Subsequently, the eccentric is turned by a chisel or the like, which is stuck into the slot 30, to the position shown I figure 4, where the straight portion 29 of the eccentric is adjacent to the hook 35. This position is stable and it requires a relatively large force to turn the eccentric from this position. It's however easy to, with a chisel, turn the eccentric to the position in figure 2 and then unlock the hook 35 from the eccentric 27. The holder provides a certain amount of suspension by the steps which are formed towards the bulge 13 in the back and towards the end portions 25,34.

When the holder should be unlocked, the eccentric is first turned to the delivery position shown in Figure 3. Then, the hook must be unlocked. To this end, there is two small apertures 41,42 in the end portion 25 and corresponding concavenessess 43,44 in the end portion 34. A chisel could be stuck in one of the apertures 41,42 and brace against in the corresponding concaveness 43,44 to move the end portions 25,34 relative each other so that the hook 35 will be unlocked.

The invention is not limited to the shown embodiment, but can be modified in other ways within the scope of the following claims.

## Claims

1. A downpipe holder comprising a wall bracket (12) that consists of a spike or screw (16) on which a plate (17) is attached and a bent metal sheet (11) arranged to embrace a downpipe, the metal sheet (11) having in use at its back a vertical bulge (13) in which the plate (17) is configured to be inserted so as to secure the sheet (11) to the bracket (12), **characterised in that** the upper portion of the bulge (13) has a horizontale slot (15) and an aperture (14) below the slot (15), and the upper end of the plate (17) is curved to form a flap (20) which fits into the horizontal slot (15) and the spike/screw (16) protrudes through the plate (17) and through the aperture (14) below the slot (15).

2. A downpipe holder according to claim 1, **characterised in that** a lower portion of the plate (17) has a locking flap (22) which is folded around the lower edge of the sheet (1).

3. A method of mounting a downpipe holder (11) according to the previous claims to a wall, wherein a spike (16) is first forced into a wall, or a screw (16) is screwed into a wall, said spike/screw (16) close to its end (18) having a plate (17), and then mounting a metal sheet (11), arranged for embracing a downpipe, on the spike/screw (16), **characterised by** slipping a slot (15) in the back of the metal sheet (11) over a flap at the top of the plate (17) and subsequently lowering the metal sheet (11) such that the rear end (18) of the spike/screw (16) penetrates an aperture (14) of the metal sheet (11).

4. A method according to claim 3 **characterised by** folding a locking flap (22) at the bottom end (21) of the plate (17) around the bottom edge of the metal sheet (11).

## Patentansprüche

1. Fallrohrhalterung umfassend: eine Wandrohrschelle (12) bestehend aus einem Dorn oder einer Schraube (16), an welcher eine Platte (17) angebracht ist, und einem gebogenen Metallblech (11), das eingerichtet ist, um ein Fallrohr zu umgreifen, wobei das Metallblech (11) an seiner Rückseite bei Verwendung eine vertikale Ausbauchung (13) aufweist, wobei die Platte (17) eingerichtet ist, um in diese eingeführt zu werden, um das Blech (11) an der Schelle (12) zu befestigen, **dadurch gekennzeichnet, dass** der obere Abschnitt der Ausbauchung (13) einen horizontalen Schlitz (15) und eine Öffnung (14) unterhalb des Schlitzes (15) aufweist, und das obere Ende der Platte (17) gekrümmt ist, um eine Lasche (20) zu bilden, die in den horizontalen Schlitz (15) passt, und der Dorn / die Schraube (16) durch die Platte (17) und durch die Öffnung (14) unterhalb des Schlitzes (15) hindurchragt.

2. Fallrohrhalterung nach Anspruch 1, **dadurch gekennzeichnet, dass** ein unterer Abschnitt der Platte (17) eine Verriegelungslasche (22) aufweist, die um die Unterkante des Blechs (1) geklappt wird.

3. Verfahren zur Montage einer Fallrohrhalterung (11) nach einem der vorhergehenden Ansprüche an einer Wand, wobei ein Dorn (16) zuerst in eine Wand getrieben wird oder eine Schraube (16) in eine Wand geschraubt wird, der Dorn/die Schraube (16) in der Nähe seines/ihres Endes (18) eine Platte (17) aufweist und dann ein Metallblech (11), das eingerichtet ist, um ein Fallrohr zu umgreifen, am Dorn / an der Schraube (16) montiert wird, **gekennzeichnet durch** Schieben eines Schlitzes (15) in der Rückseite des Metallblechs (11) über eine Lasche an der Oberseite der Platte (17) und anschließend Absenken des Metallblechs (11) dergestalt, dass das hintere Ende (18) des Dorns / der Schraube (16) durch eine Öffnung (14) des Metallblechs (11) hindurchgeht.

4. Verfahren nach Anspruch 3, **gekennzeichnet durch** Umklappen einer Verriegelungslasche (22) am unteren Ende (21) der Platte (17) um die Unterkante des Metallblechs (11).

## Revendications

1. Dispositif de maintien pour tuyau de descente, comprenant une bride murale (12) qui se compose d'un clou ou d'une vis (16) auquel / à laquelle est attachée une plaquette (17) et d'une tôle métallique cintrée (11) agencée pour encercler un tuyau de descente, ladite tôle métallique (11) ayant, en cours d'utilisation, un évasement vertical (13) dans son dos, ladite plaquette (17) étant configurée pour y être insérée afin de fixer la tôle (11) à la bride (12), **caractérisé en ce que** la partie supérieure de l'évasement (13) comporte une fente horizontale (15) et une ouverture (14) au-dessous de la fente (15) et la partie supérieure de la plaquette (17) est courbée pour former une patte (20) adaptée à s'insérer dans la fente horizontale (15) et le clou / la vis (16) dépasse à travers la plaquette (17) et l'ouverture (14) au-dessous de la fente (15).

2. Dispositif de maintien pour tuyau de descente selon la revendication 1, **caractérisé en ce qu'**une partie inférieure de la plaquette (17) a une patte de verrouillage (22) qui est repliée autour du bord inférieur de la tôle (1).

3. Procédé de montage mural d'un dispositif de maintien pour tuyau de descente (11) selon l'une des revendications précédentes, dans lequel un clou (16) est d'abord enfoncé dans un mur ou une vis (16) est vissée dans un mur, le clou / la vis (16) ayant une plaquette (17) à proximité de son extrémité (18), et puis une tôle métallique (11) agencée pour encercler un tuyau de descente est montée sur le clou / sur la vis (16), **caractérisé par** les étapes consistant à passer une fente (15) située dans le dos de la tôle métallique (11) sur une patte située sur le dessus de la plaquette (17) et ensuite faire descendre la tôle métallique (11) de sorte que l'extrémité arrière (18) du clou / de la vis (16) pénètre une ouverture (14) de la tôle métallique (11).

4. Procédé selon la revendication 3, **caractérisé par** l'étape consistant à replier une patte de verrouillage (22) à l'extrémité inférieure (21) de la plaquette (17) autour du bord inférieur de la tôle métallique (11).
